# EUROPÄISCHE PATENTSCHRIFT

(11) **EP 0 856 435 B1**
(45) Veröffentlichungstag und Bekanntmachung des Hinweises auf die Patenterteilung: **12.09.2001**
(21) Anmeldenummer: 98100547.3
(22) Anmeldetag: 14.01.1998
(51) Int. Cl.: B60R 21/16

(54) **Gassack**
Airbag
Airbag

(30) Priorität: 29.01.1997 DE 29701472 U
(43) Veröffentlichungstag der Anmeldung: 05.08.1998
(73) Patentinhaber: TRW Occupant Restraint Systems GmbH & Co. KG, 73551 Alfdorf (DE)
(72) Erfinder: Lang, Norbert, 73575 Leinzell (DE)
(74) Vertreter: Kitzhofer, Thomas, Dipl.-Ing.

(56) Entgegenhaltungen:
- DE-A- 4 240 227
- "AIR BAG TETHER" RESEARCH DISCLOSURE, Nr. 383, 1.März 1996, Seiten 181-183, XP000581320

## Beschreibung

Die Erfindung betrifft einen Gassack für ein Fahrzeuginsassen-Rückhaltesystem, mit einer Wandung, einer Einblasöffnung, einer die Einblasöffnung umgebenden Berandung als Teil der Wandung, wobei der Gassack im Bereich der Berandung an einem Gasgeneratorgehäuse befestigbar ist, wenigstens einem Fangband, welches an der Wandung befestigt ist, und einer die Berandung innenseitig wenigstens teilweise abdeckenden, mit der Wandung verbundenen Verstärkungslage.

Ein gattungsgemäßer Gassack ist aus der GB 2 243 119 A bekannt. Bei diesem Gassack sind zwei Fangbänder vorgesehen, die jeweils mit ihren beiden Enden im Bereich der Berandung mit der Wandung verbunden sind. Die Berandung selbst wird zusätzlich von einer Verstärkungslage umgeben, die die mechanische ebenso wie die thermische Belastung der Wandung und des Fangbandes im Bereich um die Einblasöffnung herum reduziert. Die Berandung ist beim Einblasen von heißem Gas großen thermischen Belastungen unterworfen, weshalb derartige Verstärkungslagen üblich sind.

Die Erfindung schafft einen Gassack, der weniger Teile als der bislang bekannte benötigt, wodurch die Fertigung vereinfacht wird. Dies wird bei einem Gassack der eingangs genannten Art dadurch erreicht, daß die Verstärkungslage ausschließlich durch das im Bereich der Berandung mit der Wandung verbundene Fangband gebildet ist. Beim erfindungsgemäßen Gassack ist keine separate Verstärkungslage mehr vorgesehen, sondern die Verstärkungslage wird ausschließlich durch das Fangband gebildet, das damit eine Doppelfunktion hat. Überraschenderweise wurde festgestellt, daß die bislang üblichen separaten Verstärkungslagen überflüssig sind, da das Fangband allein die Aufgaben einer Verstärkungslage erfüllen kann, ohne daß dies den Gassack mechanisch oder thermisch übermäßig belasten muß.

Gemäß der bevorzugten Ausführungsform ist das Fangband mit seinen Enden an gegenüberliegenden Bereichen der Berandung mit der Wandung und mit einem Zwischenabschnitt an einem der Einblasöffnung im wesentlichen gegenüberliegenden Gassackabschnitt mit der Wandung verbunden, wodurch ein großer Bereich der oder sogar die gesamte Berandung innenseitig vom Fangband abgedeckt wird. Darüber hinaus können auch mehrere Fangbänder vorgesehen sein, deren Enden zusammen die Berandung abdecken.

Weitere Merkmale und Vorteile der Erfindung ergeben sich aus der nachfolgenden Beschreibung und aus der nachfolgenden Zeichnung, auf die Bezug genommen wird.

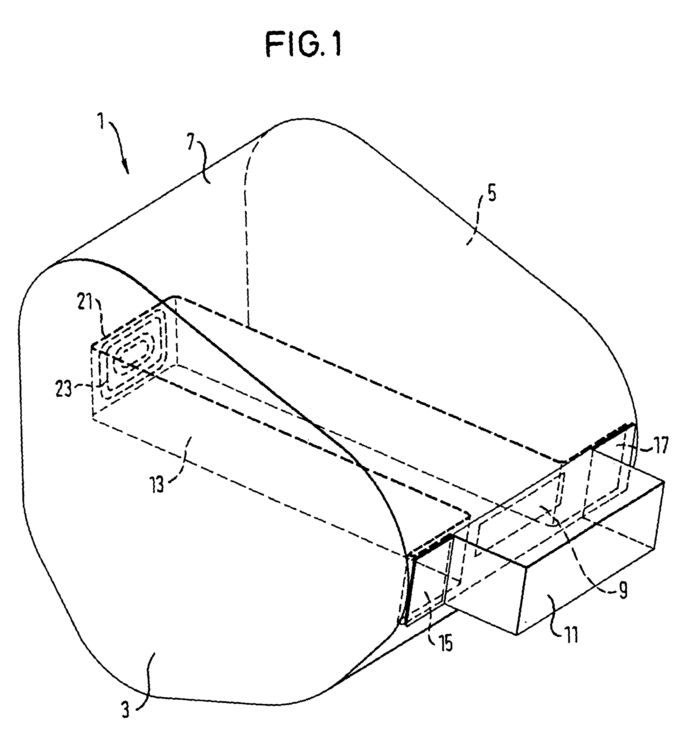

Fig. 1 zeigt eine schematische Darstellung einer Ausführungsform des erfindungsgemäßen Gassacks in aufgeblasenem Zustand.

Ein in Fig. 1 gezeigter Gassack 1 umfaßt eine Wandung, die aus zwei Seitenteilen 3, 5 und einem diese verbindenden Mantelteil 7 besteht. Die Wandung weist eine Einblasöffnung 9 auf, die von einer Berandung als Teil der Wandung umgeben ist. Im Bereich der die Einblasöffnung 9 umgebenden Berandung ist der Gassack 1 an einem Gasgeneratorgehäuse 11 auf übliche Weise befestigt, was nicht näher erläutert werden muß. Im Inneren des Gassacks 1 ist ein Fangband 13 vorgesehen, das die Form des Gassacks 1 in aufgeblasenem Zustand mitbestimmt. Das langgestreckte Fangband 13 besteht aus demselben Gassackgewebematerial wie die Wandung.

Die beiden Enden 15, 17 des Fangbandes 13 sind an gegenüberliegenden Bereichen, nämlich angrenzend an die kurzen Seiten der Einblasöffnung 9, mit der Wandung vernäht. Dadurch deckt das Fangband 13 die Berandung der Einblasöffnung 9 teilweise ab und reduziert die mechanische Belastung des Gassackgewebes in diesem Bereich. Zudem wird die Berandung auch vor zu starker Hitze, die durch das einströmende Gas hervorgerufen wird, geschützt. Die Enden des Fangbandes 13 können mit einem schwer entflammbaren Material beschichtet sein. Ferner ist es möglich, die Enden des Fangbandes 13 zu mehreren Lagen umzuschlagen, wie es in Fig. 1 am Ende 15 dargestellt ist.

An einem Zwischenabschnitt 21 des Fangbandes 13 ist dieses mit einem im wesentlichen der Einblasöffnung 9 gegenüberliebenden Gassackabschnitt durch mehrere Nähte 23 verbunden.

Da keine separaten Verstärkungslagen vorgesehen sind, kann die Anzahl der miteinander zu vernähenden Teile beim Herstellen des Gassacks 1 geringgehalten werden. Zudem reduziert sich das Packvolumen gegenüber herkömmlichen Gassäcken.

## Patentansprüche

1. Gassack für ein Fahrzeuginsassen-Rückhaltesystem, mit einer Wandung (3, 5, 7), einer Einblasöffnung (9), einer die Einblasöffnung (9) umgebenden Berandung als Teil der Wandung (3, 5, 7), wobei der Gassack (1) im Bereich der Berandung an einem Gasgeneratorgehäuse (11) befestigbar ist, wenigstens einem Fangband (13), welches an der Wandung (7) befestigt ist, und einer die Berandung innenseitig wenigstens teilweise abdeckenden, mit der Wandung (7) verbundenen Verstärkungslage, **dadurch gekennzeichnet, daß** die Verstärkungslage ausschließlich durch das im Bereich der Berandung mit der Wandung verbundene Fangband (13) gebildet ist.

2. Gassack nach Anspruch 1, **dadurch gekennzeichnet, daß** das Fangband (13) aus Gassackgewebematerial besteht.

3. Gassack nach Anspruch 1 oder 2, **dadurch gekennzeichnet, daß** das Fangband (13) mit seinen beiden Enden (15, 17) an gegenüberliegenden Bereichen der Berandung mit der Wandung (7) und mit einem Zwischenabschnitt (21) an einem der Einblasöffnung (9) im wesentlichen gegenüberliegenden Gassackabschnitt mit der Wandung (7) verbunden ist.

4. Gassack nach einem der vorstehenden Ansprüche, **dadurch gekennzeichnet, daß** der Gassack (1) ein Beifahrergassack und die Einblasöffnung (9) insgesamt im wesentlichen rechteckförmig ist und daß die Enden (15, 17) des Fangbandes (13) an den den kürzeren Seiten der Einblasöffnung (9) benachbarten Berandungsabschnitten befestigt sind.

5. Gassack nach Anspruch 3 oder 4, **dadurch gekennzeichnet, daß** die Enden (15) des Fangbandes (13) zu mehreren Lagen umgeschlagen und mit der Wandung (7) vernäht sind.

6. Gassack nach Anspruch 4, **gekennzeichnet durch** zwei gegenüberliegende Seitenteile (3, 5) und ein diese verbindendes Mantelteil (7), wobei das Fangband (13) am Mantelteil befestigt ist.

## Claims

1. A gas bag for a vehicle occupant restraint system, with a wall (3, 5, 7), an inflation opening (9) , a rim as part of the wall (3, 5, 7), surrounding the inflation opening (9), said gas bag (1) being adapted to be secured to a gas generator housing (11) in the region of the rim, with at least one limiting strap (13) which is secured to the wall (7), and with a reinforcement layer connected with the wall (7) and at least partially covering the rim on the inner side, **characterised in that** the reinforcement layer is exclusively formed by the limiting strap (13) connected with the wall in the region of the rim.

2. The gas bag according to Claim 1, **characterised in that** the limiting strap (13) consists of gas bag fabric material.

3. The gas bag according to Claim 1 or 2, **characterised in that** the limiting strap (13) is connected with the wall (7) by its two ends (15, 17) at opposite regions of the rim, and is connected with the wall (7) by an intermediate section (21) on a gas bag section lying substantially opposite the inflation opening (9).

4. The gas bag according to any of the preceding claims, **characterised in that** the gas bag (1) is a front seat passenger's gas bag and the inflation opening (9) as a whole is substantially rectangular and that the ends (15, 17) of the limiting strap (13) are secured on rim sections adjacent to the shorter sides of the inflation opening (9).

5. The gas bag according to Claim 3 or 4, **characterised in that** the ends (15) of the limiting strap (13) are folded to form several layers and are sewn with the wall (7).

6. The gas bag according to Claim 4, **characterised by** two opposite side parts (3, 5) and a covering part (7) connecting these, the limiting strap (13) being secured to the covering part.

## Revendications

1. Coussin à gaz pour un système de retenue d'occupants de véhicule, comprenant une paroi (3, 5, 7), un orifice de gonflage (9), un bord entourant l'orifice de gonflage (9) et faisant partie de la paroi (3, 5, 7), le coussin à gaz (1) pouvant être fixé à un boîtier de générateur de gaz (11) dans la zone du bord, au moins une bande d'arrêt (13) fixée à la paroi (7), et une couche de renfort qui recouvre au moins partiellement le bord sur sa face intérieure et qui est reliée à la paroi (7), **caractérisé en ce que** la couche de renfort est exclusivement formée par la bande d'arrêt (13) reliée à la paroi dans la zone du bord.

2. Coussin à gaz selon la revendication 1, **caractérisé en ce que** la bande d'arrêt (13) est réalisée dans le matériau tissé du coussin à gaz.

3. Coussin à gaz selon la revendication 1 ou 2, **caractérisé en ce que** la bande d'arrêt (13) est reliée à la paroi (7) par ses deux extrémités (15, 17) au niveau de zones opposées du bord et à la paroi (7) par une portion intermédiaire (21) au niveau d'une portion du coussin à gaz située sensiblement en vis-à-vis de l'orifice de gonflage (9) .

4. Coussin à gaz selon l'une des revendications précédentes, **caractérisé en ce que** le coussin à gaz (1) est un coussin à gaz côté passager avant et l'orifice de gonflage (9) présente une forme générale sensiblement rectangulaire, et en ce que les extrémités (15, 17) de la bande d'arrêt (13) sont fixées aux portions de bord voisines des plus petits côtés de l'orifice de gonflage (9).

5. Coussin à gaz selon la revendication 3 ou 4, **caractérisé en ce que** les extrémités (15) de la bande d'arrêt (13) sont rabattues sur plusieurs épaisseurs et cousues à la paroi (7).

6. Coussin à gaz selon la revendication 4, **caractérisé par** deux parties latérales opposées (3, 5) et par une partie enveloppante (7) qui les relie, la bande d'arrêt (13) étant fixée à la partie enveloppante.
